# EUROPEAN PATENT SPECIFICATION

(11) **EP 2 595 057 B1**
(45) Date of publication and mention of the grant of the patent: **06.04.2016**
(21) Application number: 12193076.2
(22) Date of filing: 16.11.2012
(51) Int. Cl.: G06F 9/48

(54) **Modified backfill scheduler and a method employing frequency control to reduce peak cluster power requirements**
Modifizierter Auffüllscheduler und Verfahren, das eine CPU-Frequenzsteuerung zur Reduktion des Spitzenstromverbrauchs des Clusters einsetzt
Planificateur de remblayage modifié et procédé employant une commande de fréquence afin de réduire les besoins en puissance de groupes de crête

(30) Priority: 16.11.2011 US 201161560652 P; 13.11.2012 US 201213675219
(43) Date of publication of application: 22.05.2013
(73) Proprietor: Bull HN Information Systems Inc., Phoenix, AZ 85029-1348 (US)
(72) Inventor: Egolf, David A., Glendale, AZ 85304 (US); Guenthner, Russell W., Glendale, AZ 85306 (US)
(74) Representative: Lang, Johannes

(56) References cited:
- MAJA ETINSKI ET AL: "Utilization driven power-aware parallel job scheduling", COMPUTER SCIENCE - RESEARCH AND DEVELOPMENT ; COMPUTER SCIENCE - RESEARCH AND DEVELOPMENT ORGAN DER FACHBEREICHE SOFTWARETECHNIK, DATENBANKEN UND INFORMATIONSSYSTEME DER GESELLSCHAFT FÃ Â 1/4 R INFORMATIK E.V. (GI), SPRINGER-VERLAG, BERLIN/HEIDELBERG, vol. 25, no. 3-4, 13 August 2010 (2010-08-13), pages 207-216, XP019849854, ISSN: 1865-2042
- FRANCESC GUIM ET AL: "Enabling GPU and Many-Core Systems in Heterogeneous HPC Environments Using Memory Considerations", HIGH PERFORMANCE COMPUTING AND COMMUNICATIONS (HPCC), 2010 12TH IEEE INTERNATIONAL CONFERENCE ON, IEEE, PISCATAWAY, NJ, USA, 1 September 2010 (2010-09-01), pages 146-155, XP031932129, DOI: 10.1109/HPCC.2010.29 ISBN: 978-1-4244-8335-8
- Saurabh Kumar Garg ET AL: "Energy-Efficient Scheduling of HPC Applications in Cloud Computing Environments", , 7 September 2009 (2009-09-07), XP055147271, Retrieved from the Internet: URL:http://arxiv.org/abs/0909.1146 [retrieved on 2014-02-17]

## Description

### BACKGROUND OF THE INVENTION

Recently developed processor chip sets for the ubiquitous Intel processors are exposing more power reporting and control interfaces with almost every release. The Basic Input Output System (BIOS) and operating systems of today's computer systems that are required for making use of these interfaces are trying to keep pace. In today's systems, being able to collect data on power consumption over a given period is more common by node rather than by processor or even by socket. With the advent of nodes with up to hundreds of processors it has become common practice to share nodes between scheduled jobs.

The BIOS and Power reporting features development provides for the collection of power consumption data such that power consumption data for specific jobs can be reported to the end users and the site managers or programmers for further evaluation. Because of limited API's (Application Program Interfaces) and node sharing this data may not be precise, but is still useful.

There are alternatives in the prior art for managing power consumption whether for a single processor, for a single socket, for a plurality of boards or modules, or within a computer "node". For example, some current processors, comprising one or more cores, may be configured to manage their own temperature profiles and power consumption. This is done by having the processor chip or module manage its own power by manipulating its own frequency and or voltage levels. However, this approach may not be desirable for use in large systems such as High Performance Cluster (HPC) systems that are executing applications distributed across thousands of nodes because the nodes may then be potentially running at different speeds which may hinder communication or possibly greatly slow overall system performance.

As known in the art, the term "computer cluster", referred to as "cluster" for short, is a type of computer system which completes computing jobs by means of multiple collaborative computers (also known as computing resources such as software and/or hardware resources) which are connected together. These computing resources in a same management domain have a unified management policy and provide services to users as a whole. A single computer in a cluster system is usually called a node or a computing node. The term "node" is meant to be interpreted in a general way. That is, a node can be one processor in a single cabinet, one board of processors in a single cabinet, or several boards in a single cabinet. A node can also be a virtualized collection of computing resources where physical boundaries of the hardware resources are less important.

Also, as known in the art, the scheduling of a plurality of jobs for running by a computer system, or cluster system is typically done by an operating system program module called a scheduler. Schedulers typically accept jobs from users (or from the system itself) and then schedule those jobs so as to complete them efficiently using the available or assigned system resources. Two exemplary methods of scheduling or scheduling policies are "FIFO" meaning First In First Out, and "Priority" meaning jobs are prioritized in some manner and that more important jobs are scheduled so they are more likely to run sooner than jobs having lower priority. Scheduling algorithms or policies may be quite inexact in that for example, a lower priority job may run before a higher priority depending on specific methods of scheduling or policy enforced or incorporated by a specific scheduler, or also depending on specific resource requirements.

"Backfill" scheduling is a method of scheduling or policy that typically fits on top of or follows a FIFO or Priority scheduler, for example, and attempts to fill in voids or holes in a proposed schedule and more efficiently use resources. This may result in the time required to execute a plurality of jobs being reduced from that which would be achieved for example, by a FIFO or Priority scheduler alone. Here, the term "backfill" as used herein is a form of scheduling optimization which allows a scheduler to make better use of available resources by running jobs out of order. An advantage of such scheduling is that the total system utilization is increased since more jobs may be run in a given interval of time.

In general, a backfill scheduler schedules jobs in an order that is out of order with the arrival of those jobs. That is, for example, if jobs arrive in order 1, 2, 3 a backfill scheduler is allowed to schedule those jobs for starting in an order that is different than 1, 2, 3. A strict FIFO scheduler does not typically schedule jobs out of order. In similar manner if jobs are ordered in priority 1, 2, 3 a backfill scheduler may move the starting times of selected jobs so that some of the jobs are started in an order that is out of the order of priority. A strict Priority based scheduler does not typically schedule jobs out of order of priority.

Various optimized scheduling policies for handling various types of jobs are found in the prior art. For example, there are scheduling policies for real time jobs, parallel jobs, serial jobs, and transaction type jobs. Typically, a first in first out (FIFO) scheduling policy is based on looking at priorities of jobs in queues and is beneficial for scheduling serial jobs. A backfill scheduling policy is typically used and is beneficial for handling large-scale parallel jobs as might typically be processed by a Cluster system with dozens, hundreds or even thousands of processing nodes.

Brief descriptions of two typical backfill schedulers from the prior art are provided in Appendices A, and B and such descriptions clearly establish the basis of the methods implemented within a computer system scheduler that are being proposed for modification according to certain illustrated embodiments of the present invention as described hereafter.

The document "Utilization driven power-aware parallel job scheduling", Maja Etinski et al., Computer Science - Research and Development; Springer-Verlag, Berlin/Heidelberg, ISSN 1865-2042, vol. 25, Nr. 3-4, pages 207 - 216, proposes UPAS (Utilization driven Power-Aware parallel job Scheduler) assuming DVFS enabled clusters, and to apply DVFS when system utilization is below a certain threshold, exploiting periods of low system activity. As the increase in run times due to frequency scaling can be seen as an increase in computational load, an analysis was done of HPC system dimension. This paper investigates whether having more DVFS enabled processors and scheduling jobs with UPAS can lead to lower energy consumption and higher performance.

The document "Enabling GPU and Many-Core Systems in Heterogeneous HPC Environments Using Memory Considerations", Francesc Guim et al., High Performance Computing and Communications (HPCC), 2010 12th IEEE International Conference on, 20100901 IEEE, Piscataway, NJ, USA - ISBN 978-1-4244-8335-8 ; ISBN 1-4244-8335-2, pages 146 - 155, proposes a scheduling strategy for GPU and many-core architectures for HPC environments. The proposed strategy is a variant of the backfilling scheduling policy with resource sharing considerations. Proposed is a scheduling strategy that considers the differences between GP processors and GPU computing elements in terms of computational capacity and memory bandwidth. To do this, the approach uses a resource model that predicts how shared resources are used in both GP and GPU/many-core elements. Furthermore, it considers the differences between these elements in terms of performance.

### BRIEF SUMMARY OF THE INVENTION

The invention is defined by the independent claims. The dependent claims define advantageous embodiments.

In an illustrated embodiment of the present invention, the method or steps performed by a backfill scheduler are modified so as to improve the management of power, and more specifically "peak" power during the running of a plurality of jobs.

It is very beneficial in management of peak power of HPC systems to provide power control features that allow either site management or user software to explicitly set CPU speed parameters, instead of the CPU making those decisions itself. This may potentially help in guaranteeing uniformity over time in either average or maximum peak power usage between the nodes and processors running specific jobs.

Some operating systems and / or BIOS control programs may also allow either the scheduler or the running jobs themselves to manipulate either the system frequency or the frequency of a node. It may also be allowed or provided for applications themselves to explicitly set, change or modify the processor frequency multiple times during the course of a job or series of jobs.

In an illustrated embodiment of the present invention, a "backfill scheduler" is modified to consider or examine, in its processing, the voids in a normal First In / First Out (FIFO), or Priority or other scheduler which are not normally filled by lower priority jobs. The scheduler determines if these voids can be filled by reducing the CPU frequency of the preceding jobs by an amount that will still allow them to complete before the next scheduling event or job which follows the void. This scheduler mechanism allows these preceding jobs to employ lower peak power usage during their time of execution. This approach or methodology may potentially provide for reducing power during certain periods of time for thousands of nodes, and thus has potential for significantly lowering the peak power requirements of an entire site or an entire cluster. Also, this approach can be optionally implemented by a method that does not delay the start time of any scheduled job, which can be viewed as an advantage.

For purpose of illustration before discussing specifics, it is important for understanding examples presented herein to have a description of the starting point for a typical program (job) scheduler which is described as First In First Out (FIFO). In the examples, the FIFO is viewed as being an algorithm for scheduling a job that "looks at" (examines the predicted attributes) of only one job at a time. That is, as jobs arrive at the input of the FIFO scheduler, the FIFO scheduler looks at the present schedule, and without changing the assignment of previous jobs, makes an assignment of the job presented for scheduling. In the following examples, the FIFO operates such that the job currently being scheduled will not be scheduled any earlier (prior in time) to any other previously scheduled job. The FIFO scheduler IS allowed to start the job currently being scheduled at the SAME time as prior jobs.

A "backfill" scheduler is an enhancement to the FIFO example just described which provides for the scheduler to look "back" and place jobs into the schedule at an assigned time that might be before a job already scheduled. For example, Job 5 might be scheduled to start before Job 6 even though Job 5 arrived for scheduling first. This approach potentially allows for more dense scheduling of resources (more highly utilized) than the pure FIFO approach, but is more complicated, and also may seem unfair to users because a later scheduled job might get done before an earlier scheduled job.

In another illustrated embodiment of the present invention, the goal is not to delay the finish time of any scheduled job.

In still another illustrated embodiment of the present invention, another goal is to complete all jobs within the same time as would have been achieved with a normal FIFO scheduling algorithm. In another illustrated embodiment of the present invention, a further goal is to complete all jobs before some specific time, over some specific period of time, or within various constraints in time that might be described by one well versed in the art of computer scheduling, and computer scheduler design.

As known in the art, Large High Performance Computer clusters may consist of thousands of compute nodes each with up to several hundred CPU cores (a core is a single processing unit). Clusters often consume large amounts of power. Feeding power to the cluster and getting rid of the heat produced is a major issue for its operation, and operation of, and control of expenses related to running a cluster or an entire computer site. There may be tens or even thousands of jobs executing and being scheduled on the cluster of nodes. Typically, the jobs are comprised of programs which run on each of the nodes allocated for the job run.

Some priority scheme is typically employed in order to choose an order or schedule to be used to run the jobs. The software which chooses the job is referred to as the cluster job scheduler. It is typical for all the nodes or other resources required for a particular job to not be available at the time of job submission. Thus, jobs must wait until their node and other resource requirements are met. While they are waiting, it is possible that many of the nodes that they will eventually use become free. The nodes which became free may sit idle unless the cluster job scheduler can find something for them to do.

A normal backfill scheduler will search for lower priority jobs which could successfully use these smaller number of nodes and still complete in time for the scheduled start of the aforementioned job which is waiting for all the nodes to become free. This requires that the expected runtime of these "backfill" jobs be known to the scheduler. It is typical for the runtime of submitted jobs to be included as an estimate in the job submission in order to facilitate this type of scheduling.

The method of the present invention takes advantage of the fact that there may not be any suitable jobs which can be employed to fill a void. The scheduler is capable of seeing or detecting these unusable voids as soon as the next job to run is in the queue. At that time, according to an illustrated embodiment of the present invention, the scheduler operates to attempt to reduce the size of voids by decreasing the CPU frequency of the nodes running specific jobs which will become idle prior, or which are scheduled to complete prior to the next job start. This decrease in the frequency elongates (extends) the execution time of these jobs and reduces the peak power required during this period.

A person knowledgeable in the art will be able to employ the techniques of the present invention for either a CPU whose frequency may be set in discrete steps or a CPU whose frequency is continuously variable.

It will be noted that power consumption on current processor models is roughly directly proportional to frequency in a linear relationship. Job runtime for a CPU bound job will also typically be roughly directly proportional to frequency. For an I/O bound job, reductions in CPU frequency may have less impact on overall runtime.

The main power consumption within a typical processing node is primarily by the CPU, but other hardware in the node such as fans and power supplies and other support chips and modules can also require a significant amount of power. In cases where the node is not powered down or put into a low power sleep state, then the use of the teachings of the present invention would typically cause the total power consumption to remain roughly the same or slightly increase while retaining the benefit of the peak power consumption being lower during the periods of reduced frequency. In cases where the node could have been powered down or put into a low power sleep state, then total power may actually increase, but the peak power would still typically be reduced by the use of the teachings of the present invention.

It will be further noted out that the peak operating temperatures for each node whose frequency is regulated will also be smoothed. The resulting smoothing of the power consumption and accompanying smoothing of temperature variations could prove beneficial for increasing the lifetime of the components.

A further illustrated embodiment of this present invention utilizes the observation that when a backfill scheduler selects a job or jobs to run in the scheduling voids as previously described, the void will typically not be completely filled. This refinement according to the teachings of the present invention enables the scheduler to determine that the attempt at backfill has left a portion of the void unfilled. This portion can then be eliminated or nearly eliminated by the scheduler reducing the CPU frequency of the node or nodes where the backfill job or jobs are being run. This frequency reduction results in elongating the runtime of the job or jobs, but the adjustment in frequency will be made such that the jobs will still be able to complete in time so as to not impact the overall system schedule. This reduction in frequency results in a reduction in peak power requirements for the site during this period of operation.

Another useful refinement according to the teachings of this invention as shown in a further illustrated embodiment of the present invention is based upon recognizing that after a job or jobs has been deployed at a reduced frequency, a job of higher priority may arrive whose start time may be expedited by having the scheduler reduce elongation of the already launched jobs by increasing their CPU frequency. This increasing of the frequencies of jobs already in execution in turn may produce a void suitable for the running of the newly arrived job or jobs.

It will be noted that the prediction of the runtime of a job may not be precise whether its time is estimated by a person running the job, based upon history, or calculated using some algorithm. Therefore, another refinement according to the teachings of this invention as shown in a further illustrated embodiment is based upon recognizing if a job with previously reduced frequency is running longer than its expected or forecasted time and is now delaying the start of another job, in which case the frequency reduction can be canceled and the frequency increased by the scheduler.

### BRIEF DESCRIPTION OF THE SEVERAL VIEWS OF THE DRAWINGS

The invention is better understood by reading the detailed description of the invention in conjunction with the accompanying drawings in which:

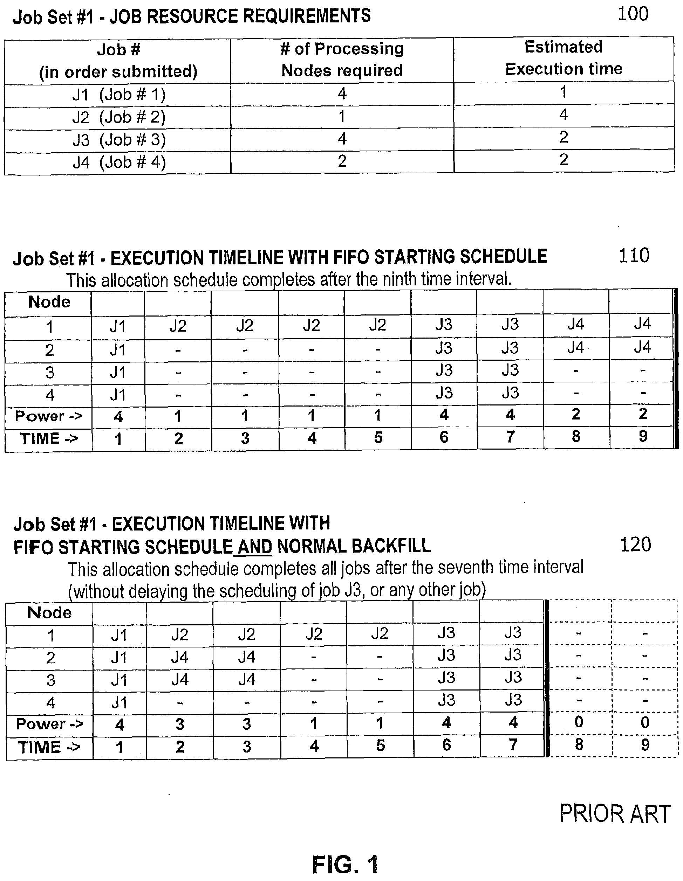

Fig. 1 illustrates a table depicting an exemplary set of programs (jobs) to be run labeled "Job Set # 1" with its predicted resource requirements, an exemplary execution timeline for that job set as might be observed using a typical prior art FIFO scheduler, and a second exemplary timeline for that same job based on using a typical FIFO scheduler and also a normal backfill scheduler;

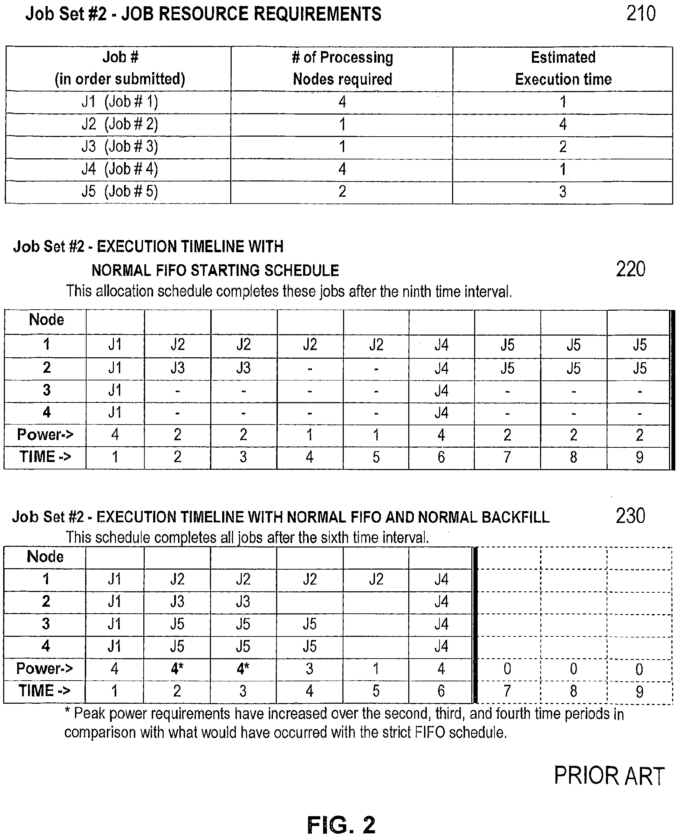

Fig. 2 illustrates a further table depicting a second exemplary job set labeled "Job Set # 2" with its predicted resource requirements, an exemplary execution timeline for that job set as might be observed using a typical prior art FIFO scheduler, and a second exemplary timeline for that same job based on using a typical prior art FIFO scheduler and also a normal prior art backfill scheduler;

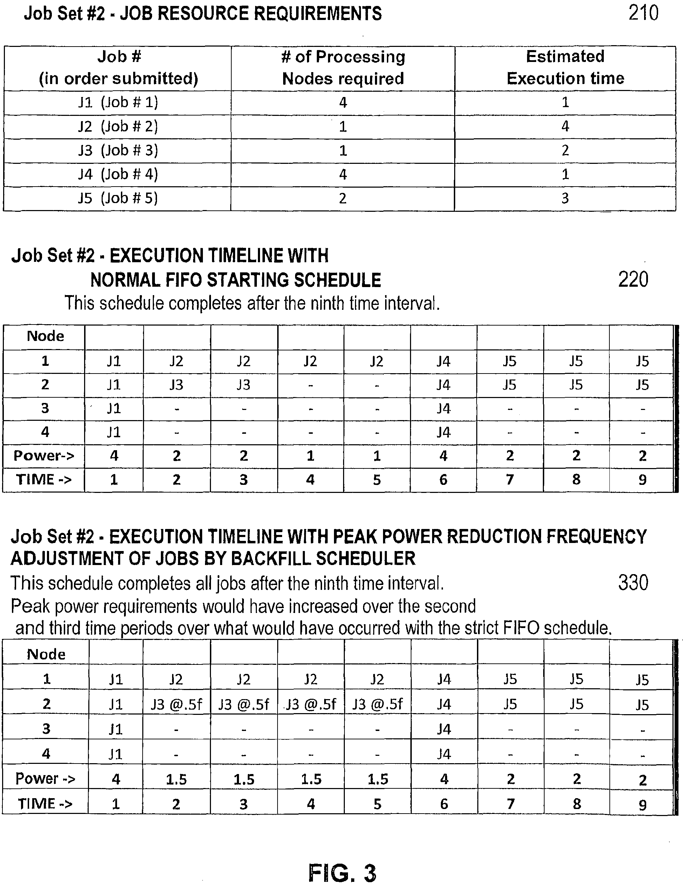

Fig. 3 illustrates a third exemplary timeline for Job Set # 2 as might be observed utilizing a scheduler which operates to reduce peak power requirements by reducing the processing frequency for selected hardware servicing selected jobs;

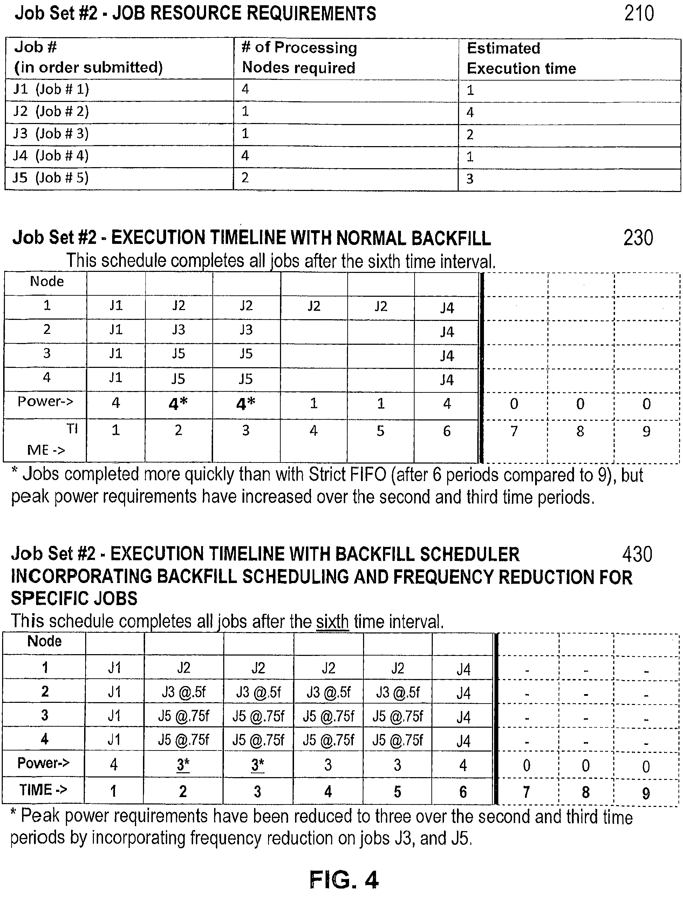

Fig. 4 illustrates a fourth exemplary timeline for Job Set # 2 according to an illustrated embodiment of the present invention in which a normal FIFO scheduler is combined with an enhanced backfill scheduler according to the teachings of the present invention which reduces frequency of processing for certain nodes, those nodes specifically selected for frequency reduction by the backfill scheduler;

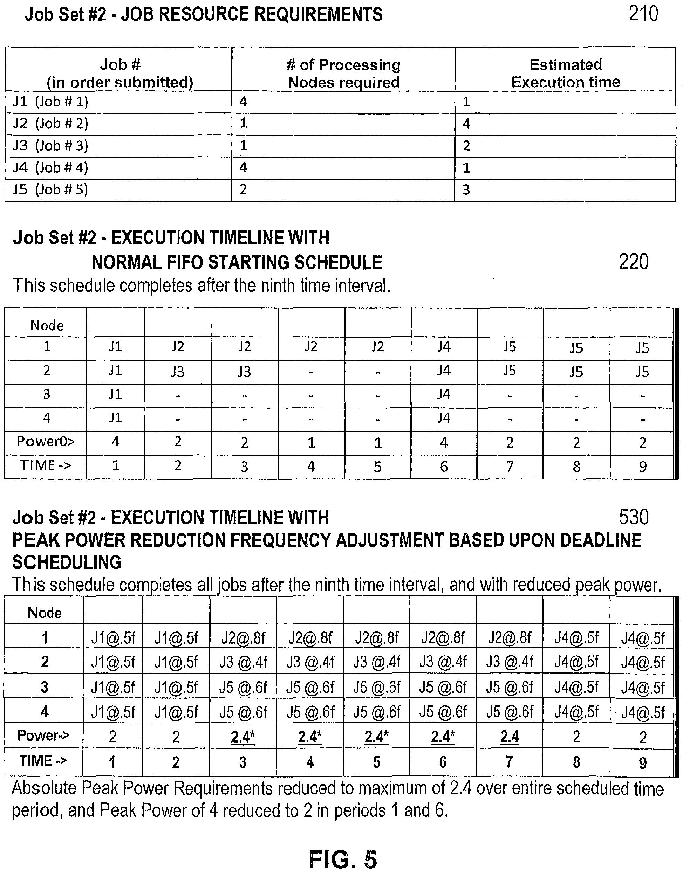

Fig. 5 illustrates a fifth exemplary timeline for Job Set # 2 as might be observed during the operation of a further illustrated embodiment of the present invention in which a normal FIFO scheduler is utilized and then combined with a further enhanced backfill scheduler according to the teachings of the present invention which reduces frequency of processing for certain nodes, those nodes specifically selected for frequency reduction by the backfill scheduler, and further allowing for jobs to be reduced in frequency over periods of time for purpose of reducing peak power while still completing the job set within a determined deadline, optionally based upon the original FIFO schedule completion deadline; and,

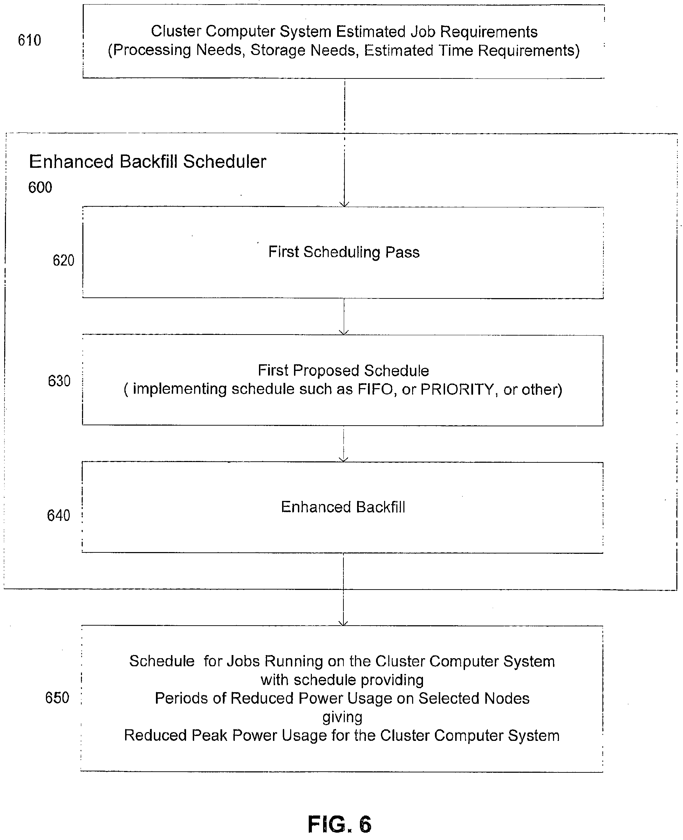

Fig. 6 illustrates exemplary processing steps performed by an enhanced backfill scheduler in an illustrated embodiment of the present invention.

### DETAILED DESCRIPTION OF THE INVENTION

FIG. 1 is a table 100 that illustrates a set of four programs to be scheduled for running on a computer system such as a High Performance Cluster computer system. While the low number of programs such as four is not typical in that typically there might be dozens, hundreds or even more jobs running simultaneously on a large system, but four jobs is enough to illustrate the one particular method of scheduling jobs described herein. The Job Resource Requirements for the four jobs are depicted in table 100, that corresponds to the four jobs designated as J1, J2, J3, and J4. As indicated, Job 1 requires four "nodes" and is estimated to require one unit of execution time; Job 2 requires one node for four units of time, and so on as depicted in the table 100. As used herein, a "node" is an arbitrary name for one or more processing units, typically connected closely and / or physically together. The "unit" of execution time is arbitrary and could be any unit of time useful at a level for illustrating a division of jobs into manageable units of time, such as milliseconds or seconds for example.

FIG 1 also depicts a timeline 110 which illustrates a scheduling for running the jobs in Job Set # 1, to their expected completion, over a period of nine time units. The scheduler utilized is a First In First Out Scheduler which for example might schedule jobs numbered one to four in the order "1" to "4", with "J1" being scheduled first, and allocated four nodes for one time unit, which is depicted in time slot "1" in the table 100. "J2" require only one node and is estimated to take four units of time, and is therefore give node one for time slots two through five. "J1" is predicted to be over by the end of time slot "1", so node "1" is available for "J2" to begin at the beginning of time slot "2". In similar manner as shown "J3" takes four nodes for two time slots, and "J4" takes two nodes for two time slots, with all four jobs estimated to be complete by the end of time slot "9".

This description provided in Fig. 1 table 110 does not necessarily illustrate having accomplished getting the four jobs completed as quickly as possible, given the resources, in that it can be observed in table 110 that some of the nodes are not used in time slots "2" through "5". An enhancement to typical FIFO scheduling which is called "backfill" scheduling provides for job "J4" to be merged "black" into allocation during time slots "2" and "3", since nodes "2" and "3" are unused during those time periods. This allows for job J4 to be completed earlier, in parallel with the processing of job "J2" and thus all four jobs can be estimated to be completed by the end of time slot "7".

Further depicted in Fig 1, is a table 120 that provides an estimate of "power" (such as watts) utilized during each unit of time, with the assumption that processing one job on one node takes one unit of power. This assumption would not be necessarily accurate, but is adequate for illustrating approximate units of power expended by the four jobs.

Figure 2 provides illustration of a table 220 containing a second job set called "Job Set #2" comprising a set of five jobs with Job Resource Requirements shown in the table 220 describing for each of the five jobs the number of nodes required and an estimated execution time. As in the case of Figure 1, Fig. 2 table 220 illustrates an Execution Timeline with a Normal FIFO Starting Schedule. Jobs "J1" through "J5" are scheduled in starting order from "1" to "5". It will be noted that for this example, the "FIFO" scheduling of job "J5" starts job J5 in time slice "7" because J4 is already scheduled in time slice 6, and no other nodes available for running "J5" in parallel or starting after the start of "J4". It will be noted however that during time slices "1" to "3" and "6", the total power for the four nodes is four, that is, all four nodes are running a job at high frequency.

According to a further illustrated embodiment of the present invention depicted in the Figure 3 that is based on the recognition that when a FIFO scheduler selects a job or jobs to run, it is likely that there are time units during which all nodes are not utilized, and therefore the scheduler can include a capability of spreading selected jobs over a larger than normal number of time units, by reducing the frequency (and / or voltage). As shown in timeline 220, job "J3" is processed only during time periods "2" and "3". The FIFO scheduler includes the capability of recognizing during job scheduling however that there are "holes" during time periods "4" and "5" for nodes "2", "3", and "4". Thus, the scheduler can provide for processing Job "J3" with control parameters such that the assigned nodes consume less power, but the job as a consequence will be expected to take longer. In the depicted time line 330 in Figure 3, job "J3" is run at 1/2 frequency for four time units instead of two. That is, job "J3" runs at 1/2 speed during time slices "2" to "5" (four time units) instead of in two time units, "2" and "3" from the FIFO schedule shown in table 220 (depicted above in the same Figure 3). As a direct consequence of such operation, the power consumed during time periods "2" to "5" is reduced to "1.5" units evenly spread over time units "2" to "5".

According to another illustrated embodiment of the present invention illustrated in Figure 4, it can be seen that combining power reduction management for selected nodes with a backfill scheduler (previously described) enables power usage to be spread even more evenly while at the same time still reducing the time required for processing all five jobs. In Figure 4, timeline 230 depicts a schedule utilizing a backfill scheduler with power usage of "4" in time slices "2" and "3". According to the teachings of the present invention, an enhanced backfill scheduler can accomplish the same total work in the same six time units with a schedule as shown in the timeline 430 of Figure 4 in which jobs "J3" and "J5" are both run at half frequency and take twice as long. This enables the enhanced scheduler to spread the power usage evenly at a power of "3" over time units "2" to "5". This is in comparison to the use of the non-enhanced backfill method for which power is depicted at "4" in time slices "2" and "3" and power of "1" during time slices "4" and "5". The enhancement of adding power management on a node basis to the operational steps of the backfill scheduler provides for power consumption to be made steadier, or more even over time.

It will be noted however in the timeline 330 of Figure 3 and the timeline 430 of Figure 4 that high peak power usage of "4" still occurs during time slices "1" and "6". With the first enhanced backfill scheduler or with normal backfill scheduling, it has been assumed that getting jobs completed as quickly as possible is a typical benefit. However, for a system or cluster for which peak power leveling is important, it is an advantage according to the teachings of the present invention to provide a further enhancement to the backfill scheduler that takes into account that if jobs "J1" to "J5" can be scheduled for completion over nine time periods or units, the original time taken by a normal FIFO scheduler, then the power management for a plurality of jobs and maybe even if all of the jobs are set so as to reduce power consumption and power consumption is spread somewhat evenly over nine time units, instead of the faster six time units.

In Figure 5, an exemplary scheduling example diagrammatically illustrates reducing the frequency of all of the nodes to selected percentages of a maximum frequency so as to achieve a maximum peak power of 2.4 units during time periods "3" to "7" and a peak power of 2.0 units for the remaining time periods. Comparing timeline 530 with timeline 220 in Figure 5 on the same page shows a notable smoothing of power usage over the nine time units.

Decisions to take longer to run particular jobs at a reduced speed; e.g., J5, as opposed to running them at their fastest time, can be based on other scheduler criteria such as user attributes, user specified job submission parameters, time of day, temperature of rack, current site peak power usage, and other factors which will be obvious to those knowledgeable in the art. The method and enhanced scheduler operation according to the present invention utilizes the techniques of the backfill scheduler to locate candidate jobs that provide for reduced power consumption.

In other illustrated embodiments, the method of the present invention can be employed to utilize the site scheduler so as to control the processor speed for each job step in order to get more predictable results.

Figure 6 illustrates the exemplary processing steps performed by an enhanced backfill scheduler according to a further illustrated embodiment of the present invention. In Figure 6, a set of estimated job requirements 610 is provided to an enhanced backfill scheduler 600 of a cluster computer system. The enhanced backfill scheduler performs processing steps typically based on control programs which are loaded into memory of a computer system on which the scheduler program or module is running. The scheduler is typically implemented as part of the Operating System but can also be implemented as an application program. The steps performed by the enhanced backfill scheduler 600 are labeled or designated as steps 620, 630, and 640 in Figure 6, but these steps could be combined or performed in other manner as could be readily understood or appreciated by one skilled in the art of programming computer system schedulers. The first exemplary step 620 of the enhanced backfill scheduler is performed to develop a first proposed schedule which assigns proposed time slots for jobs executing on selected nodes. This step would typically be implemented using standard techniques. The first proposed schedule is then stored in computer system memory, and this schedule is then analyzed by an enhanced backfill procedure or method 640 which may itself include multiple steps. For example, the first schedule may be analyzed and jobs moved to fill in unused time slots in the proposed schedule. The modified schedule is then analyzed as to predicted or computed power usage, and where a need to conserve power usage is identified, nodes are identified which should be run at reduced frequency during selected periods of time so as to reduce overall Cluster Peak Power usage. The modified schedule would typically attempt to have the scheduler 600 schedule jobs to be completed within certain time limits, either identified by a user or possibly determined from the first proposed schedule.

The illustrated method and enhanced scheduler of the present invention may be employed in conjunction with the operations described above.

It may provide further benefits in the operation of a High Performance Computer cluster, or any computer system in terms of providing a method which allows for computer system users or administrators to provide input to the scheduling of programs, jobs, or job sets that enables the method being employed or performed by the computer system scheduler to utilize that input in making scheduling decisions. For example, a user could choose to maximize performance during running of a particular job by selecting not to allow power management by the scheduler. (It will be noted that power management by the hardware, BIOS, or operating system still may occur to avoid damaging equipment or for other reasons). In this manner users can "help" or assist the method employed or performed by the scheduler to make better decisions by providing at least some indication and information to the scheduler as to, for example, as to which jobs are most important, which jobs cannot employ processor frequency management, and which jobs must be completed within specific time periods.

In another illustrated embodiment that incorporates the teachings of the present invention, a selection by a user or administrator might provide a user with the capability of allowing power management with potential for increasing run time in return for reduced billing or charges incurred for running a particular program or job. Connecting or associating billing, rates of resource usage accounting, or other "cost" or "charges" for running particular programs or jobs with user input describing desired or allowed power management by the scheduler would provide incentive for users to allow or select to have power management applied to their job(s). In a further enhancement, specific user jobs could be implicitly run and billed with permission given to apply power management based upon the job being run "from" a specific computer system user id (userid) source.

### Appendix A

**PRIOR ART - Description of Backfill Scheduler from International Business Machines (IBM) Cluster Products Information Center web page documentation from World Wide Web http address:**
htt://publib.boulder.ibm.com/infocenter/clresctr/vxrx/index.jsp?topic=%2Fcom.ibm.cluster.loadl.v5r1.load100.doc%2Fam2ug_admusebackfill.htm

**Using the BACKFILL scheduler**
Tivoli Workload Scheduler LoadLeveler V5.1 Using and Administering SC23-6792-00

The BACKFILL scheduling algorithm in LoadLeveler is designed to maximize the use of resources to achieve the highest system efficiency, while preventing potentially excessive delays in starting jobs with large resource requirements.

These large jobs can run because the BACKFILL scheduler does not allow jobs with smaller resource requirements to continuously use up resources before the larger jobs can accumulate enough resources to run. While BACKFILL can be used for both serial and parallel jobs, the potential advantage is greater with parallel jobs.

Job steps are arranged in a queue based on their **SYSPRIO** order as they arrive from the Schedd nodes in the cluster. The queue can be periodically reordered depending on the value of
the **RECALCULATE_SYSPRIO_INTERVAL** keyword. In each dispatching cycle, as determined by
the **NEGOTIATOR_INTERVAL** and **NEGOTIATOR_CYCLE_DELAY** configuration keywords, the BACKFILL algorithm examines these job steps sequentially in an attempt to find available resources to run each job step, then dispatches those steps to run.

Once the BACKFILL algorithm encounters a job step for which it cannot immediately find enough resources, that job step becomes known as a "top dog". The BACKFILL algorithm can allocate multiple top dogs in the same dispatch cycle. By using the **MAX_TOP_DOGS** configuration keyword (for more information, see Configuration keyword reference), you can define the maximum number of top dogs that the central manager will allocate. For each top dog, the BACKFILL algorithm will attempt to calculate the earliest time at which enough resources will become free to run the corresponding top dog. This is based on the assumption that each currently running job step will run until its hard wall clock limit is reached and that when a job step terminates, the resources which that step has been using will become available.

The time at which enough currently running job steps will have terminated, meaning enough resources have become available to run a top dog, is called top dog's future start time. The future start time of each top dog is effectively guaranteed for the remainder of the execution of the BACKFILL algorithm. All resources that each top dog will use at its corresponding start time and for its duration, as specified by its hard wall clock limit, are reserved (not to be confused with the reservation feature available in LoadLeveler). When reserving resources for a top dog, specific machines are reserved and if **RSET_MCM_AFFINITY** is specified then specific CPUs are reserved.

**Note:** A job that is bound to a reservation is not considered for top-dog scheduling, so there is no top-dog scheduling performed inside reservations.

In some cases, it may not be possible to calculate the future start time of a job step. Consider, for example, a case where there are 20 nodes in the cluster and a job step requires 24 nodes to run. Even when all nodes in the cluster are idle, it will not be possible for this job step to run. Only the addition of nodes to the cluster would allow the job step to run, and there is no way the BACKFILL algorithm can make any assumptions about when that could take place. In situations like this, the job step is not considered a "top dog", no resources are "reserved", and the BACKFILL algorithm goes on to the next job step in the queue.

The BACKFILL scheduling algorithm classifies job steps into distinct types: REGULAR, TOP DOG, and BACKFILL:
- The REGULAR job step is a job step for which enough resources are currently available and no top dogs have yet been allocated.
- The TOP DOG job step is a job step for which not enough resources are currently available, but enough resources are available at a future time and one of the following conditions is met:
   o The TOP DOG job step is not expected to run at a time when any other top dog is expected to run.
   ∘ If the TOP DOG is expected to run at a time when some other top dogs are expected to run, then it cannot be using resources reserved by such top dogs.
- The BACKFILL job step is a job step for which enough resources are currently available and one of the following conditions is met:
   o The BACKFILL job step is expected to complete before the future start times of all top dogs, based on the hard wall clock limit of the BACKFILL job step.
   ∘ If the BACKFILL job step is not expected to complete before the future start time of at least one top dog, then it cannot be using resources reserved by the top dogs that are expected to start before BACKFILL job step is expected to complete.

### Appendix B

**PRIOR ART - Description of Backfill Scheduler from Adaptive Computer web page documentation of MAUI Scheduler from World Wide Web http address:**
http://www.adaptivecomputing.com/resources/docs/maui/8.2bac kfill.php

### 8.2.1 Backfill Overview

Backfill is a scheduling optimization which allows a scheduler to make better use of available resources by running jobs out of order. When Maui schedules, it prioritizes the jobs in the queue according to a number of factors and then orders the jobs into a 'highest priority first' sorted list. It starts the jobs one by one stepping through the priority list until it reaches a job which it cannot start. Because all jobs and reservations possess a start time and a wallclock limit, Maui can determine the completion time of all jobs in the queue. Consequently, Maui ca n also determine the earliest the needed resources will become available for the highest priority job to start.

Backfill operates based on this 'earliest job start' information. Because Maui knows the earliest the highest priority job can start, and which resources it will need at that time, it can also determine which jobs can be started without delaying this job. Enabling backfill allows the scheduler to start other, lower-priority jobs so long as they do not delay the highest priority job. If Backfill is enabled, Maui, 'protects' the highest priority job's start time by creating a job reservation to reserve the needed resources at the appropriate time. Maui then can any job which not not interfere with this reservation.

Backfill offers significant scheduler performance improvement. In a typical large system, enabling backfill will increase system utilization by around 20% and improve turnaround time by an even greater amount. Because of the way it works, essentially filling in holes in node space, backfill tends to favor smaller and shorter running jobs more than larger and longer running ones. It is common to see over 90% of these small and short jobs backfilled. Consequently, sites will see marked improvement in the level of service delivered to the small, short jobs and only moderate to no improvement for the larger, long ones.

The question arises, is backfill a purely good feature. Doesn't there have to be a trade-off somewhere? Doesn't there have to be a dark side? Well, there are a few drawbacks to using backfill but they are fairly minor. First of all, because backfill locates jobs to run scattered throughout the idle job queue, it tends to diminish the influence of the job prioritization a site has chosen and thus may negate any desired workload steering attempts through this prioritization. Secondly, although the start time of the highest priority job is protected by a reservation, what is to prevent the third priority job from starting early and possibly delaying the start of the second priority job? Ahh, a problem. Actually, one that is easily handled as will be described later.

The third problem is actually a little more subtle. Consider the following scenario involving the 2 processor cluster shown in figure 1. Job A has a 4 hour wallclock limit and requires 1 processor. It started 1 hour ago and will reach its wallclock limit in 3 more hours. Job B is the highest priority idle job and requires 2 processors for 1 hour. Job C is the next highest priority job and requires 1 processor for 2 hours. Maui examines the jobs and correctly determines that job A must finish in 2 hours and thus, the earliest job B can start is in 2 hours. Maui also determines that job C can start and finish in less than this amount of time. Consequently, Maui starts job C on the idle processor. One hour later, job A completes early. Apparently, the user overestimated the amount of time his job would need by a few hours. Since job B is now the highest priority job, it should be able to run. However, job C, a lower priority job was started an hour ago and the resources needed for job B are not available. Maui re-evaluates job B's reservation and determines that it can be slid forward an hour. At time 3, job B sta rts.

Ok, now the post-game show. Job A is happy because it ran to completion. Job C is happy because it got to start immediately. Job B is sort of happy because it got to run 1 hour sooner than it originally was told it could. However, if backfill was not enabled, job B would have been able to run 2 hours earlier. Not a big deal, usually. However, the scenario described above actually occurs fairly frequently. This is because the user estimates for how long their jobs will take is generally very bad. Job wallclock estimate accuracy, or wallclock accuracy, is defined as the ratio of wall time required to actually run the job divided by the wall time requested for the job. Wallclock accuracy varies from site to site but the site average is rarely better than 40%. Because the quality of the walltime estimate provided by the user is so low, job reservations for high priority jobs are often later than they need to be.

Although there do exist some minor drawbacks with backfill, its net performance impact on a site's workload is very positive. Although a few of the highest priority jobs may get temporarily delayed, they probably got to their position as highest priority as soon as they did because jobs in front of them got to run earlier due to backfill. Studies have shown that only a very small fraction of jobs are truly delayed and when they are, it is only by a fraction of their total queue time. At the same time, many jobs are started significantly earlier than would have occurred without backfill.

## Claims

1. A method performed by a backfill job scheduler (600) scheduling running of a plurality of jobs (J1-J5) comprised in a set of jobs on a computer system having multiple nodes (1-4), wherein each job in the set of jobs requires one or several nodes, the method providing for reducing peak computer system power usage during running of the plurality of jobs, the computer system providing to the scheduler with the capability of controlling processor frequency of operation for one or more selected nodes of the multiple nodes of the computer system, a reduction in node processor frequency typically resulting in reduced power usage on that node during the period of reduced frequency, the steps of the method comprising (430):
a) assigning a first possible schedule executable by the scheduler which specifies a first scheduled order for running the plurality of jobs within a first amount of time;
b) modifying the first possible schedule by having the scheduler perform a backfilling operation that produces a second schedule having a second scheduled order for running the plurality of jobs within a scheduled second amount of time, the scheduled second amount of time being less than the first amount of time;
c) the scheduler examining the second schedule and identifying holes, wherein a hole is a period of time where no job requires a node, occurring in scheduled time allocated in the second schedule during which one or more individual nodes are not being fully utilized, for creating a list of holes wherein each entry for each hole in the list of holes identifies an underutilized node and an underutilized time period during which the node is not being fully utilized;
d) the scheduler further examining or searching the second schedule of step c and identifying those jobs which utilize the underutilized nodes during adjacent time periods in the second schedule , each adjacent time period representing a period of time adjacent in time to each node's associated underutilized periods of time, those jobs being identified or designated as adjacent jobs by the scheduler; and
e) the scheduler modifying frequency control parameters included in the second schedule to reduce the frequency of operation of the nodes which are scheduled to run one or more of the identified adjacent jobs during at least a portion of the adjacent time periods and during the associated underutilized periods of time to move processing time of those identified adjacent jobs into the holes in the scheduled time in the second schedule, and to reduce power usage on the node during the adjacent time periods.

2. Method according to claim 1, further comprising the step of:
f) the scheduler again examining and then modifying the second schedule so as to reduce peak power usage by reducing frequency of operation of one or more nodes during the first time period while still maintaining expected completion of the plurality of jobs within the first amount of time.

3. An enhanced backfill scheduler (600) for use in a cluster computer system having multiple nodes (1-4), the enhanced scheduler enabling reduction of peak computer system power while running a plurality of jobs (J1-J5) comprised in a set of jobs over a period of time, wherein each job in the set of jobs requires one or several nodes, the computer system providing within control parameters used by the scheduler a capability of controlling frequency of operation for selected nodes of the multiple nodes of the computer system, the enhanced scheduler running on either the cluster computer system itself or on another computer system and the scheduler comprising (430):
a) a first table storing a first possible schedule assigned by the scheduler for the plurality of jobs on the cluster computer system, the first possible schedule specifying a first scheduled order for running that plurality of jobs in a first amount of time;
b) the scheduler including a backing filling mechanism for modifying the first possible schedule by performing a backfilling operation to generates a second schedule in a second table having a second scheduled order for running that plurality of jobs in a second amount of time, the second amount of time being less than the first amount of time;
c) the scheduler further including a search mechanism for examining the second schedule and identifying holes in scheduled time, wherein a hole is a period of time where no job requires a node, occurring in the second schedule during which one or more individual nodes are not being fully utilized, for identifying a plurality of holes with each entry for each hole in the list of holes designating the underutilized node and the underutilized time period during which that node is not being fully utilized;
d) the search mechanism being operative to further examine the second schedule and identify jobs which utilize the underutilized nodes during adjacent time periods, each of the adjacent time periods being a period of time adjacent in time in the second schedule to each node's associated underutilized periods of time, the jobs being identified by the search mechanism as adjacent jobs;
e) the scheduler invoking the capability for controlling frequency of operation to modify frequency control parameters included in the second schedule of the second table to reduce the frequency of operation of the nodes which are scheduled to run one or more of the identified adjacent jobs during at least a portion of the adjacent time periods and during the associated underutilized periods of time to move processing time of those identified adjacent jobs into the holes in the scheduled time of the second schedule; and
f) the search mechanism further operating to reexamine and then modify the second schedule of the second table to reduce peak power usage by reducing the frequency of operation of one or more nodes during determined periods of time specified in the second table while still completing the plurality of jobs within the first amount of time.

## Patentansprüche

1. Verfahren, ausgeführt durch einen Auffüll-Aufgaben-Planer (600), der das Ausführen einer Vielzahl von Aufgaben (J1-J5) plant, die in einem Satz von Aufgaben auf einem Computersystem enthalten sind, das mehrere Knoten (1-4) aufweist, wobei jede Aufgabe in dem Satz von Aufgaben einen oder mehrere Knoten benötigt, wobei das Verfahren für einen reduzierten Spitzen-Computersystem-Leistungsverbrauch während des Ausführens der Vielzahl von Aufgaben sorgt, wobei das Computersystem dem Planer die Fähigkeit des Steuerns einer Prozessor-Betriebsfrequenz bereitstellt für einen oder mehrere ausgewählte Knoten der Vielzahl von Knoten des Computersystems, wobei eine Reduzierung der Prozessorknotenfrequenz typischerweise in einem reduzierten Leistungsverbrauch auf diesem Knoten resultiert während der Periode reduzierter Frequenz, wobei die Schritte des Verfahrens umfassen (430):
a) Zuweisen eines ersten möglichen Plans, der durch den Planer ausführbar ist, welcher eine erste geplante Reihenfolge zum Ausführen der Vielzahl von Aufgaben innerhalb einer ersten Zeitdauer spezifiziert;
b) Modifizieren des ersten möglichen Plans dadurch, dass der Planer eine Auffüll-Operation ausführt, die einen zweiten Plan produziert mit einer zweiten geplanten Reihenfolge zum Ausführen der Vielzahl von Aufgaben innerhalb einer geplanten zweiten Zeitdauer, wobei die geplante zweite Zeitdauer kürzer ist als die erste Zeitdauer;
c) Untersuchen, durch den Planer, des zweiten Plans und Identifizieren von Löchern, wobei ein Loch eine Zeitperiode ist, während derer keine Aufgabe einen Knoten benötigt, auftretend in geplanter Zeit, die in dem zweiten Plan zugewiesen ist, während derer einer oder mehrere individuelle Knoten nicht voll verwendet werden, zum Erzeugen einer Liste von Löchern, wobei jeder Eintrag für jedes Loch in der Liste von Löchern einen unterverwendeten Knoten und eine unterverwendete Zeitperiode identifiziert, während derer der Knoten nicht voll verwendet wird;
d) ferner Untersuchen oder Durchsuchen, durch den Planer, des zweiten Plans aus Schritt c und Identifizieren derjenigen Aufgaben, welche die unterverwendeten Knoten während benachbarter Zeitperioden in dem zweiten Plan verwenden, wobei jede benachbarte Zeitperiode eine Zeitperiode darstellt, die in der Zeit benachbart ist zu eines jeden Knotens zugeordneten unterverwendeten Zeitperioden, wobei diese Aufgaben durch den Planer als benachbarte Aufgaben identifiziert oder festgelegt werden; und
e) Modifizieren, durch den Planer, von Frequenzsteuerparametern, die in dem zweiten Plan enthalten sind, zum Verringern der Operationsfrequenz der Knoten, welche eingeplant sind, um eine oder mehrere der identifizierten benachbarten Aufgaben während zumindest eines Teils der benachbarten Zeitperioden und während der zugehörigen unterverwendeten Zeitperioden auszuführen, um Verarbeitungszeit dieser identifizierten benachbarten Aufgaben zu verschieben in die Löcher in der geplanten Zeit in dem zweiten Plan, und zum Reduzieren von Leistungsverbrauch auf dem Knoten während der benachbarten Zeitperioden.

2. Verfahren nach Anspruch 1, ferner umfassend den Schritt:
f) Erneutes Untersuchen, durch den Planer, und dann Modifizieren des zweiten Plans, um den Spitzenleistungsverbrauch zu reduzieren durch Verringern der Operationsfrequenz eines oder mehrerer Knoten während der ersten Zeitperiode unter Beibehaltung der erwarteten Erledigung der Vielzahl von Aufgaben innerhalb der ersten Zeitdauer.

3. Verbesserter Auffüll-Planer (600) zur Verwendung in einem Cluster-Computersystem mit einer Vielzahl von Knoten (1-4), wobei der verbesserte Planer eine Reduzierung der Spitzen-Computersystem-Leistung ermöglicht während des Ausführens einer Vielzahl von Aufgaben (J1-J5), die enthalten sind in einem Satz von Aufgaben während einer Zeitperiode, wobei jede Aufgabe in dem Satz von Aufgaben einen oder mehrere Knoten benötigt, wobei das Computersystem innerhalb von Steuerparametern, verwendet durch den Planer, eine Fähigkeit zur Steuerung einer Operationsfrequenz für ausgewählte Konten aus der Vielzahl von Knoten des Computersystems bereitstellt, wobei der verbesserte Planer entweder auf dem Cluster-Computersystem selbst oder auf einem anderen Computersystem ausgeführt wird, und wobei der Planer umfasst (430):
a) eine erste Tabelle, die einen ersten möglichen Plan speichert, der durch den Planer für die Vielzahl von Aufgaben auf dem Cluster-Computersystem zugewiesen ist, wobei der erste mögliche Plan eine erste geplante Reihenfolge zum Ausführen der Vielzahl von Aufgaben innerhalb einer ersten Zeitdauer spezifiziert;
b) wobei der Planer einen Auffüll-Mechanismus umfasst zum Modifizieren des ersten möglichen Plans durch Ausführen einer Auffüll-Operation zum Erzeugen eines zweiten Plans in einer zweiten Tabelle mit einer zweiten geplanten Reihenfolge zum Ausführen der Vielzahl von Aufgaben innerhalb einer zweiten Zeitdauer, wobei die zweite Zeitdauer kürzer ist als die erste Zeitdauer;
c) wobei der Planer ferner einen Such-Mechanismus umfasst zum Untersuchen des zweiten Plans und Identifizieren von Löchern, wobei ein Loch eine Zeitperiode ist, während derer keine Aufgabe einen Knoten benötigt, auftretend in dem zweiten Plan, während dem einer oder mehrere individuelle Knoten nicht voll verwendet werden, zum Identifizieren einer Vielzahl von Löchern, wobei jeder Eintrag für jedes Loch in der Liste von Löchern den unterverwendeten Knoten und die unterverwendete Zeitperiode identifiziert, während derer der Knoten nicht voll verwendet wird;
d) wobei der Such-Mechanismus betreibbar ist zum weiteren Untersuchen des zweiten Plans und Identifizieren von Aufgaben, welche die unterverwendeten Knoten während benachbarter Zeitperioden verwenden, wobei jede der benachbarten Zeitperioden eine Zeitperiode darstellt, die in dem zweiten Plan in der Zeit benachbart ist zu eines jeden Knotens zugeordneten unterverwendeten Zeitperioden, wobei die Aufgaben durch den Such-Mechanismus als benachbarte Aufgaben identifiziert werden;
e) wobei der Planer die Fähigkeit aufruft zum Steuern von Operationsfrequenzen zum Modifizieren von Frequenz-Steuerparametern, die in dem zweiten Plan der zweiten Tabelle enthalten sind, zum Verringern der Operationsfrequenz der Knoten, welche eingeplant sind, um eine oder mehrere der identifizierten benachbarten Aufgaben während zumindest eines Teils der benachbarten Zeitperioden und während der zugehörigen unterverwendeten Zeitperioden auszuführen, um Verarbeitungszeit dieser identifizierten benachbarten Aufgaben zu verschieben in die Löcher in der geplanten Zeit des zweiten Plans; und
f) wobei der Such-Mechanismus ferner betrieben wird zum erneuten Untersuchen und dann Modifizieren des zweiten Plans der zweiten Tabelle, um den Spitzenleistungsverbrauch zu reduzieren durch Verringern der Operationsfrequenz eines oder mehrerer Knoten während bestimmter Zeitperioden, die in der zweiten Tabelle spezifiziert sind, wobei dennoch die Vielzahl von Aufgaben innerhalb der ersten Zeitdauer erledigt werden.

## Revendications

1. Un procédé exécuté par un planificateur de tâches à remplacement (600) planifiant l'exécution d'une pluralité de tâches (J1-J5) comprises dans un ensemble de tâches sur un système informatique possédant des noeuds multiples (1-4), où chaque tâche du jeu de tâches requiert un ou plusieurs noeuds, le procédé assurant la réduction de l'utilisation de la puissance crête du système informatique durant l'exécution de la pluralité de tâches, le système informatique donnant au planificateur la capacité de contrôler la fréquence de fonctionnement du processeur pour un ou plusieurs noeuds sélectionnés des noeuds multiples du système informatique, une réduction de la fréquence du processeur de noeud résultant typiquement en une utilisation réduite de la puissance sur ce noeud durant la période de fréquence réduite, les étapes du procédé comprenant (430):
a) l'attribution d'une première planification possible exécutable par le planificateur qui spécifie un premier ordre planifié pour l'exécution de la pluralité de tâches dans les limites d'une première quantité de temps;
b) la modification de la première planification possible en faisant exécuter par le planificateur une opération de remplacement qui produit une seconde planification présentant un second ordre planifié pour l'exécution de la pluralité de tâches dans les limites d'une seconde quantité de temps planifié, la seconde quantité de temps planifié étant inférieure à la première quantité de temps;
c) l'examen par le planificateur de la seconde planification et l'identification de trous, un trou étant une période temporelle où aucune tâche n'a besoin d'un noeud, survenant dans le temps planifié alloué à la seconde planification durant laquelle un ou plusieurs noeuds individuels ne sont pas complètement utilisés, pour créer une liste de trous où chaque rubrique pour chaque trou de la liste de trous identifie un noeud sous-utilisé et une période de temps sous-utilisée durant laquelle le noeud n'est pas complètement utilisé;
d) l'examen ou la recherche ultérieure par le planificateur de la seconde planification de l'étape c et l'identification de celles des tâches qui utilisent les noeuds sous-utilisés durant des périodes de temps adjacentes dans la seconde planification, chaque période de temps adjacente représentant une période de temps adjacente temporellement à chaque noeud à chacune des périodes de temps sous-utilisées associées à chaque noeud, celles des tâches qui sont identifiées ou désignées en tant que tâches adjacentes par le planificateur; et
e) la modification par le planificateur de paramètres de contrôle de fréquence inclus dans la seconde planification pour réduire la fréquence de fonctionnement des noeuds qui sont planifiés pour faire exécuter une ou plusieurs des tâches adjacentes identifiées durant au moins une partie des périodes temporelles adjacentes et durant les périodes temporelles sous-utilisées associées pour déplacer le temps de traitement de ces tâches adjacentes identifiées vers les trous dans le temps planifié dans la seconde planification, et pour réduire l'utilisation de puissance sur le noeud durant les périodes temporelles adjacentes.

2. Le procédé de la revendication 1, comprenant en outre l'étape suivante:
f) l'examen à nouveau par le planificateur puis la modification de la seconde planification de manière à réduire l'utilisation de la puissance crête par réduction de la fréquence de fonctionnement d'un ou plusieurs noeuds durant la première période temporelle tout en maintenant l'achèvement prévu de la pluralité de tâches dans les limites de la première quantité de temps.

3. Un planificateur à remplacement renforcé (600) pour une utilisation dans un système informatique en grappes possédant des noeuds multiples (1-4), le planificateur renforcé permettant une réduction de la puissance crête du système informatique pendant l'exécution d'une pluralité de tâches (J1-J5) comprises dans un ensemble de tâches sur une période de temps, chaque tâche de l'ensemble de tâches requérant un ou plusieurs noeuds, le système informatique permettant dans les limites de paramètres de contrôle utilisés par le planificateur une capacité de contrôle de la fréquence de fonctionnement pour des noeuds sélectionnés des noeuds multiples du système informatique, le planificateur renforcé s'exécutant soit sur le système informatique en grappes proprement dit soit sur un autre système informatique et le planificateur comprenant (430):
a) une première table mémorisant une première planification possible attribuée par le planificateur à la pluralité de tâches sur le système informatique en grappe, la première planification possible spécifiant un premier ordre planifié pour l'exécution de cette pluralité de tâches dans une première quantité de temps;
b) le planificateur comprenant un mécanisme de remplissage par l'arrière pour modifier la première planification possible par exécution d'une opération de remplacement pour générer une seconde planification dans une seconde table possédant un second ordre planifié pour exécuter cette pluralité de tâches dans une seconde quantité de temps, la seconde quantité de temps étant inférieure à la première quantité de temps;
c) le planificateur comprenant en outre un mécanisme de recherche pour examiner la seconde planification et identifier des trous dans le temps planifié, un trou étant une période de temps où aucune tâche ne requiert un noeud, survenant dans la seconde planification durant laquelle un ou plusieurs noeuds individuels ne sont pas complètement utilisés, pour identifier une pluralité de trous avec chaque rubrique pour chaque trou dans la liste de trous désignant le noeud sous-utilisé et la période de temps sous-utilisée durant laquelle ce noeud n'est pas complètement utilisé ;
d) le mécanisme de recherche étant opérant pour examiner en outre la seconde planification et identifier les tâches qui utilisent les noeuds sous-utilisés durant des périodes temporelles adjacentes, chacune des périodes temporelles adjacentes étant une période de temps adjacente dans le temps dans la seconde planification à chacune des périodes de temps sous-utilisées associées à chaque noeud, les tâches étant identifiées par le mécanisme de recherche en tant que tâches adjacentes ;
e) la mise en oeuvre par le planificateur de la capacité de contrôler la fréquence de fonctionnement pour modifier les paramètres de contrôle de fréquence inclus dans la seconde planification de la seconde table pour réduire la fréquence de fonctionnement des noeuds qui sont planifiés pour exécuter une ou plusieurs des tâches adjacentes identifiées durant au moins une partie des périodes temporelles adjacentes et durant les périodes de temps sous-utilisées associées pour déplacer le temps de traitement de celles des tâches adjacentes qui ont été identifiées vers les trous dans le temps planifié de la seconde planification; et
f) le mécanisme de recherche étant en outre opérant pour réexaminer et modifier la seconde planification de la seconde table pour réduire l'usage de puissance crête par réduction de la fréquence de fonctionnement d'un ou plusieurs noeuds durant des périodes de temps déterminées spécifiées dans la seconde table tout en continuant à achever la pluralité de tâches dans les limites de la première quantité de temps.
